# EUROPEAN PATENT APPLICATION

(11) **EP 4 350 590 A1**
(43) Date of publication of application: **10.04.2024**
(21) Application number: 23200268.3
(22) Date of filing: 28.09.2023
(51) Int. Cl.: G06Q 10/063, G06Q 50/02

(54) **SYSTEM FOR MANAGING/MONITORING NATURAL ECOSYSTEM**

(30) Priority: 04.10.2022 JP 2022160285
(71) Applicant: Hitachi, Ltd., Tokyo 100-8280 (JP)
(72) Inventor: MATSUNAGA, Hiromitsu, Tokyo, 100-8280 (JP)
(74) Representative: MERH-IP Matias Erny Reichl Hoffmann Patentanwälte PartG mbB

(57) **Abstract**

In a system for managing/monitoring a natural ecosystem, comprising: an input unit receiving basic information of a target area as an object to be managed or monitored, management or monitoring plan data of an ecosystem in the target area, environment data including measurement data, and ecosystem data; a storage unit storing the input data and process data; a process unit processing data; and an output unit outputting data, the process unit calculates a deviation between the management or monitoring plan data input in the input unit with respect to the target area and the environment data and the ecosystem data, and when the deviation is smaller than a predetermined threshold, stores the environment data and the ecosystem data regarding the target area into the storage unit and, when the deviation is larger than the predetermined threshold, outputs the deviation, and the environment data and the ecosystem data of the target area from the output unit.

## Description

### BACKGROUND OF THE INVENTION

The present invention relates to a system for managing/monitoring a natural ecosystem.

With increase in awareness of natural environment conservation and development of various legal systems and the like, a system for managing/monitoring a natural ecosystem is in demand.

With respect to this point, for example, Japanese Unexamined Patent Application Publication No. 2014-026507 proposes the following for the propose of enabling an economic value of an ecological system to be easily evaluated. "An information processing apparatus 10 outputs an evaluation list 11a which is a list of a plurality of ecological system services of different kinds and includes information indicative of one or more parameters used for a method of evaluating an economic value selected for each of the ecological system services. Subsequently, the information processing apparatus 10 receives values of the one or more parameters which are input on the basis of the evaluation list 11a for two or more ecological system services in the plurality of ecological system services written in the evaluation list 11a. The information processing apparatus 10 calculates the economic values of the two or more ecological system services on the basis of the evaluation method for each of the ecological system services and the values of one or more parameters which are input".

### SUMMARY OF THE INVENTION

As a concrete example of efforts toward nature environment protection, a plan of certification criteria according to the OECM (Other Effective area-based Conservation Measures, cooperated with private organizations and the like) was proposed and is being examined so as to be realized.

In the plan of certification criteria according to the OECM, a main direction is to establish a method of obtaining and measuring environment data of natural ecology and managing/monitoring the environment data and activity of a natural ecosystem. There are, however, a number of problems to be solved.

In the problems, with respect to the acquisition and measurement of environment data, for example, since the environment data of natural ecology is not closed but is open, variations occur in acquired data. Since it is particularly difficult to ensure uniformity in measurement of environment data by human beings, reliability and transparency are to be secured.

In managing/monitoring, information and states of an activity/management plan and an activity/management record cannot be easily accessed and are not visualized. Consequently, accessibility and visualization have to be considered in system configuration. The above-described patent literature does not address the problems.

In consideration of the above, an object of the present invention is to build a system for managing/ monitoring a natural ecosystem (environment information and activities), which can improve reliability, transparency, visualization, and accessibility to environment information and activity records based on a management plan.

The system for managing/monitoring a natural ecosystem, comprises: an input unit receiving basic information of a target area as an object to be managed or monitored, management or monitoring plan data of an ecosystem in the target area, environment data including measurement data, and ecosystem data; a storage unit storing the input data and process data; a process unit processing data; and/or an output unit outputting data. In the system for managing/monitoring a natural ecosystem, the process unit calculates a deviation between the management or monitoring plan data which is input in the input unit with respect to the target area and the environment data and the ecosystem data, and in the case where the deviation is smaller than a predetermined threshold, stores the environment data and the ecosystem data regarding the target area into the storage unit and, in the case where the deviation is larger than the predetermined threshold, outputs the deviation, and the environment data and the ecosystem data of the target area from the output unit.

It is possible to build the system for managing/ monitoring a natural ecosystem (environment information and activities), which can improve reliability, transparency, visualization, and accessibility to environment information and activity records based on a management plan.

### BRIEF DESCRIPTION OF THE DRAWINGS

FIG. 1 is a diagram illustrating a configuration example of a system for managing/monitoring a natural ecosystem according to an embodiment of the present invention.
FIG. 2 is a diagram illustrating a plan of certification criteria according to the OECM.
FIG. 3 is a diagram illustrating the details of data D (D1 to D9) to be taken.
FIG. 4 is a diagram illustrating an input process flow in a process unit 20 of various data D.
FIG. 5 is a diagram illustrating a concrete input process case.
FIG. 6 is a diagram illustrating a concrete input process case.
FIG. 7 is a diagram illustrating value criteria of biodiversity.
FIG. 8 is a diagram illustrating an example of an output process flow.
FIG. 9 is a diagram illustrating a process flow regarding viewing in system use scenes.
FIG. 10 is a diagram illustrating a process flow regarding preparation of an application document in the system use scenes.
FIG. 11 is a diagram illustrating layer display.
FIG. 12 is a diagram illustrating a state where various users refer to a database DB in accordance with their interests and display images on screens in their preferred forms.

### DETAILED DESCRIPTION OF THE PREFERRED EMBODIMENTS

Hereinafter, embodiments of the present invention will be described with reference to the drawings.

### First Embodiment

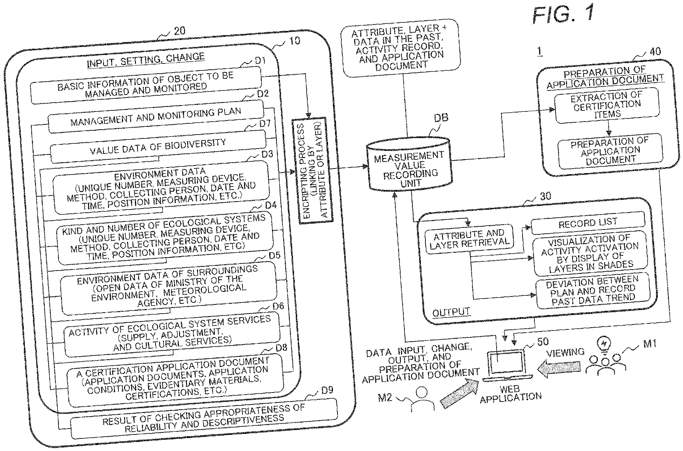

FIG. 1 is a diagram illustrating a configuration example of a system for managing/monitoring a natural ecosystem according to an embodiment of the present invention. A natural ecosystem managing/monitoring system 1 illustrated in FIG. 1 obtains, stores, and processes various data by using a computing device and its storage resource to assure reliability, transparency, visualization, and accessibility at the time of providing information to users M1 and M2.

The managing/monitoring system 1 includes, when its functions are broadly divided, an input unit 10 of various data D, a process unit 20 of the various data D, a database DB storing data before, after and during data process, a display output unit 30 displaying and outputting the data of the database DB, and a various-application-document preparation unit 40, assures reliability and transparency of the various data D, and assures visualization and accessibility in usage of the data D (display and document preparation).

Hereinafter, the details of the units will be sequentially described. First, scenes of using an output of the system will be described. The system use scenes will be described by being divided it into two cases; viewing, and preparation of an application document. In viewing in the system use scenes, the viewer M1 as the user (for example, an administrator, the Ministry of the Environment, an investor, a local resident, the manager of a certification system, or the like) can freely see various environment data presented by the display output unit 30 in a visualized form with high accessibility by operating a WEB application 50 which is linked to the system 1 via communication.

In preparation of an application document in the system use scenes, the application-document preparing person M2 as the user (the manager of an area to be managed and monitored) operates the WEB application 50 linked to the system 1 via communication so that input, change, and output can be properly performed on an application document in which necessary items are filled in and which is presented by the various-application-document preparation unit 40. It becomes unnecessary to enter data again, so that convenience of preparation improves.

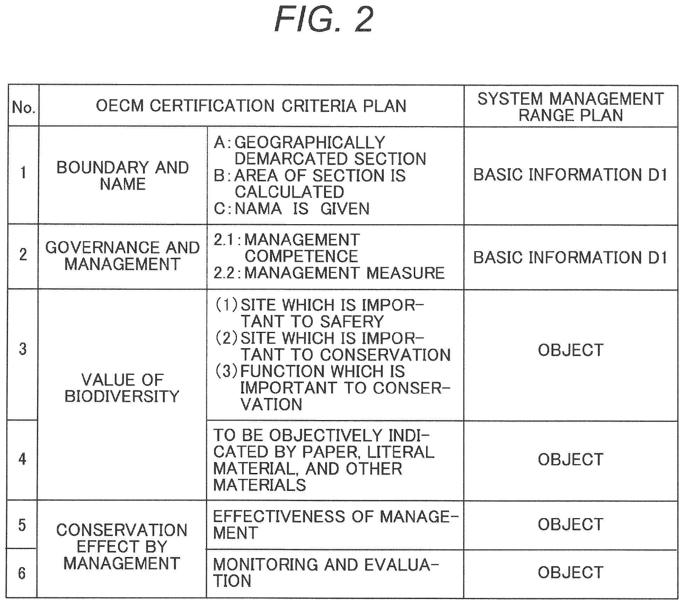

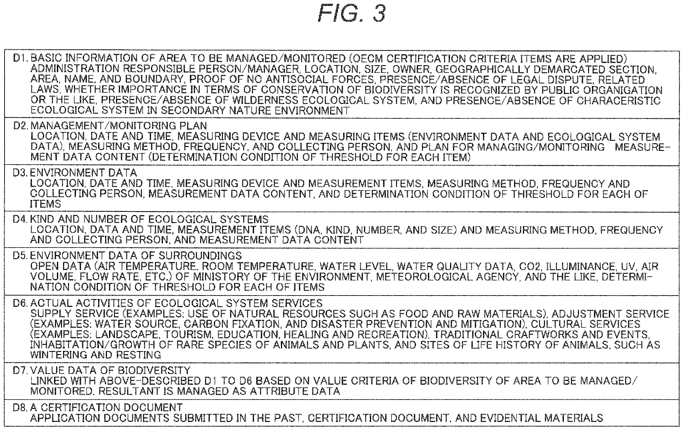

The input unit 10 and the data D to be taken (D1 to D9) will now be described with reference to FIG. 3. The data D relates to main items which are desired to be managed by the natural ecosystem managing/monitoring system according to the present invention and is based on a plan of certification criteria according to the OECM illustrated in FIG. 2. In the certification criteria plan of FIG. 2, four items of "boundary and name", "governance and management", "value of biodiversity", and "conservation effect by management" are defined in the vertical direction, and more detailed items of the four items are defined as certification criteria plans in the lateral direction.

For example, regarding "boundary and name", requirements are that a section is geographically defined, the area of a section is calculated, and a name is given. Regarding "governance and management", requirements are that a management competence and a management measure are clarified. Regarding "value of biodiversity", requirements are that a site is important to safety, a site is important to conservation, a function is important to conservation, and the value can be objectively indicated by paper, literal material, or another material. Regarding "conservation effect by management", requirements are effectiveness of management, and monitoring and evaluation. Although only main items are described here, the high-level concepts are described more specifically.

In data D (D1 to D8) to be taken to the input unit 10 illustrated in FIG. 3, particularly the items related to "boundary and name" and "governance and management" will be called basic information. D1 in the data D to be taken in FIG. 1 is the basic information of an area to be managed and monitored, to which OECM certification criteria items are applied. Concretely, it includes an administration responsible person/manager, location, size, owner, geographically demarcated section, area, name, and boundary, proof of no antisocial forces, the presence or absence of a legal dispute, related laws, whether or not the importance in terms of conservation of biodiversity is recognized by a public agency, or the like, the presence or absence of a wilderness ecological system, the presence or absence of a characteristic ecological system in a secondary natural environment, and the like.

D2 is a management/monitoring plan and includes, concretely, location, date and time, a measuring device, measurement items (environment data and ecological system data), a measuring method, frequency, and a collecting person, a plan for managing/monitoring measurement data content (a determination condition of a threshold for each of the items), and the like.

D3 is environment data and includes, concretely, location, date and time, measurement items, a measuring method, frequency, a data collecting person, measurement data content, a determination condition of a threshold for each of the items, and the like.

D4 is kind and number of ecological systems and includes, concretely, location, date and time, measurement items (DNA, kind, number, and size), a measuring method, frequency, a data collecting person, measurement data content, a determination condition of a threshold for each of the items, and the like.

D5 is environment data of the surroundings and includes, concretely, open data (air temperature, room temperature, water level, water quality data, CO2, illuminance, UV, air volume, flow rate, and the like) of the Ministry of the Environment, the Meteorological Agency, and the like, a determination condition of a threshold for the items, and the like.

D6 is actual activities of ecological system services and includes, concretely, supply service (examples: use of natural resources as food, raw materials, and the like), adjustment service (examples: water source, carbon fixation, and disaster prevention and mitigation), cultural service (examples: landscape, tourism, education, healing, and recreation), traditional handicrafts and events, inhabitation and growth of rare species of animals and plants, sites of life histories of animals such as wintering and rest, and the like.

D7 is value data of biodiversity, concretely, linked to the above-described data D1 to D6 on the basis of the value criteria of biodiversity of the area to be managed/monitored, and is managed as attribute data.

D8 is a certification document including application documents submitted in the past, a certification document, evidential materials, and the like.

D9 is data of results of checking the appropriateness of the reliability and descriptiveness of the above-described data. Since the data is generated in the process and is not input data, it is not written in the list of FIG. 3 but is written only in FIG. 1.

The use scenes of the data are different. The management/monitoring plan D2, the environment data D3, and the ecosystem data D4 are used in a scene of the input process of the natural ecosystem managing/monitoring system 1. The surrounding environment data D5 and the ecosystem service actual activity D6 is used in a scene of output of the natural ecosystem managing/monitoring system 1.

The various data is organized in forms according to the certification criteria plan according to the OECM, and input values, process values, intermediate process values, and the like of the various data are properly stored in the database DB.

According to the above, the environment data D3 and the ecosystem data D4 is defined as measurement items in the management/monitoring plan D2. In the environment data D3 and the ecosystem data D4, data (DNA, kind, number, and size) of an observation result and thresholds at the time of evaluating the data are defined with a concrete monitoring execution method. It can be said that the environment data D3 expresses a target numerical value of data to be measured, and the ecosystem data D4 is an index expressing an actual measurement value of data to be measured.

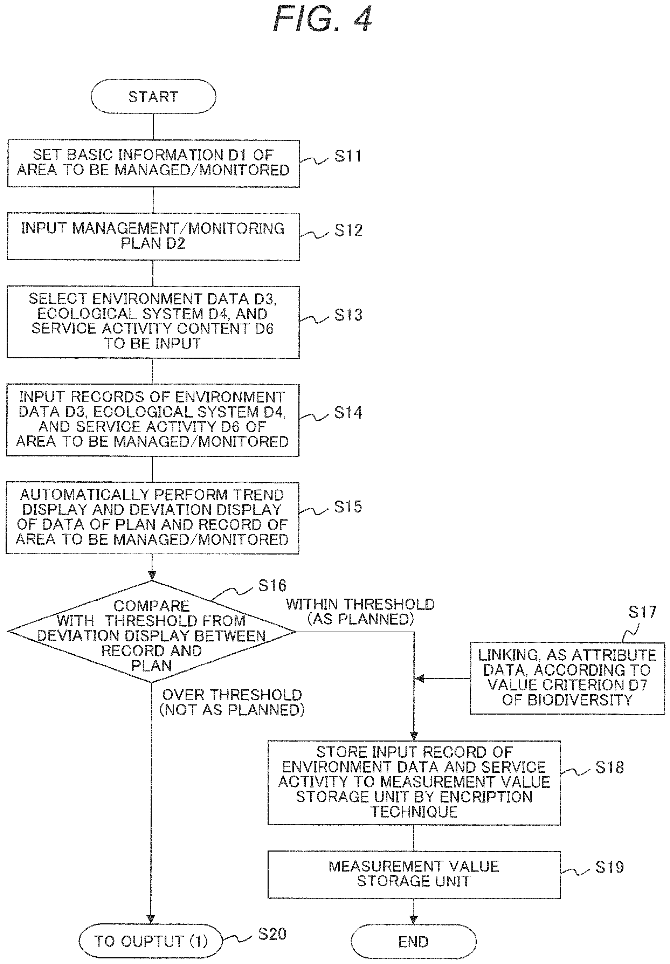

Subsequently, the input process in the process unit 20 of the various data D will be described with reference to the input process flowchart of FIG. 4. In the input process, first, the basic information D1 of an area to be managed/monitored is set in process step 511. In process step S12, the management/monitoring plan D2 is input.

In process step S13, the environment data D3, the ecological system D4, and the service activity content D6 to be input are selected. As the input process, since it is sufficient to input data at an appropriate opportunity, only a process content to be performed at that time is selected. It is assumed now that all of the items are selected.

In process step S14, records of the environment data D3, the ecological system D4, and the service activity content D6 of the area to be managed/monitored are input. The input at this time is performed for the items corresponding to the items selected in the process step S13.

In process step S15, trend display and deviation display of each of data of the plan and data of the record of the area to be managed/monitored are automatically performed. The display in this case is performed on the monitor screen of a terminal device on which an input processing person works. In process step S16, the input processing person compares the threshold with the deviation display between the record and the plan while checking the data displayed on the monitor screen. Alternatively, the comparison may be performed by leaving it to the process of the computer. As a result, whether the difference between the plan and the record exceeds a preliminarily-set threshold or not can be determined.

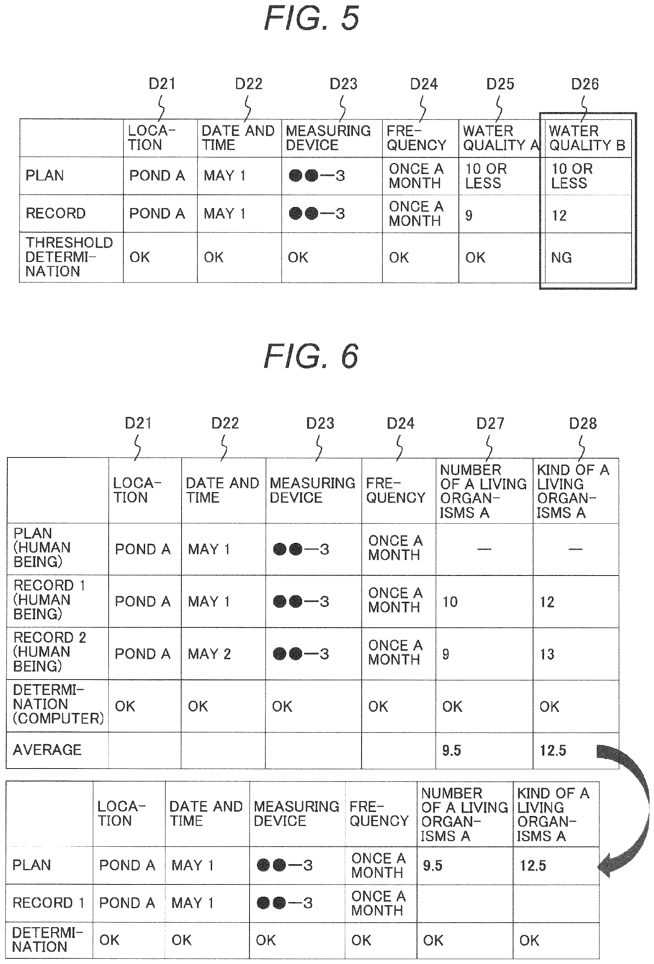

FIG. 5 is a diagram illustrating a concrete process case of the above-described input process executed by the process unit 20. In the lateral direction, as the items set in the management/monitoring plan D2, concretely, location D21, date and time D22, measuring device D23 and its execution frequency D24 and, as measurement items, water quality A (D24) and water quality B (D25) are illustrated. In the vertical direction, plan content, record content, and evaluation content (threshold determination) in the above-described items are written.

In the plan, with respect to pond A, the water qualities A and B are measured at the frequency of once a month by using a measurement device ••-3 on the first of May, and both of the water qualities A and B are planned to be set to 10 or less. As a result of actually measuring the water qualities under the conditions, although the water quality A was 9 and satisfies the criterion, the water quality B was 12 and does not satisfy the criterion. In this case, in the comparison between the record and the threshold in the plan in the process step S16, it was evaluated as "OK" with respect to the measurement under the same conditions but evaluated as "NG" (not good) with respect to the water quality B.

FIG. 6 illustrates another case which is different from the case of FIG. 5 with respect to the point that target values were not set or could not set for the measurement items (in this case, number D27 and kind D28 of a living organism A) in the initial plan. It is assumed that, as a result of measurement according to the plan on the first of May, 10 was measured as the number D 27 of the living organisms A, and 12 was measured as the kinds D28. Further, as a result of measurement on the second of May as a later date, 9 was measured as the number D27 of the living organisms A, and 13 was measured as the kinds D28. It illustrates that the actual state in the past is grasped as an average and, using the average as a new target in future, the operation is started. In this example, 9.5 as the average of the number D27 of the living organisms A is set as a new target, and 12.5 as the average of the kinds D28 of the living organisms A is set as a new target.

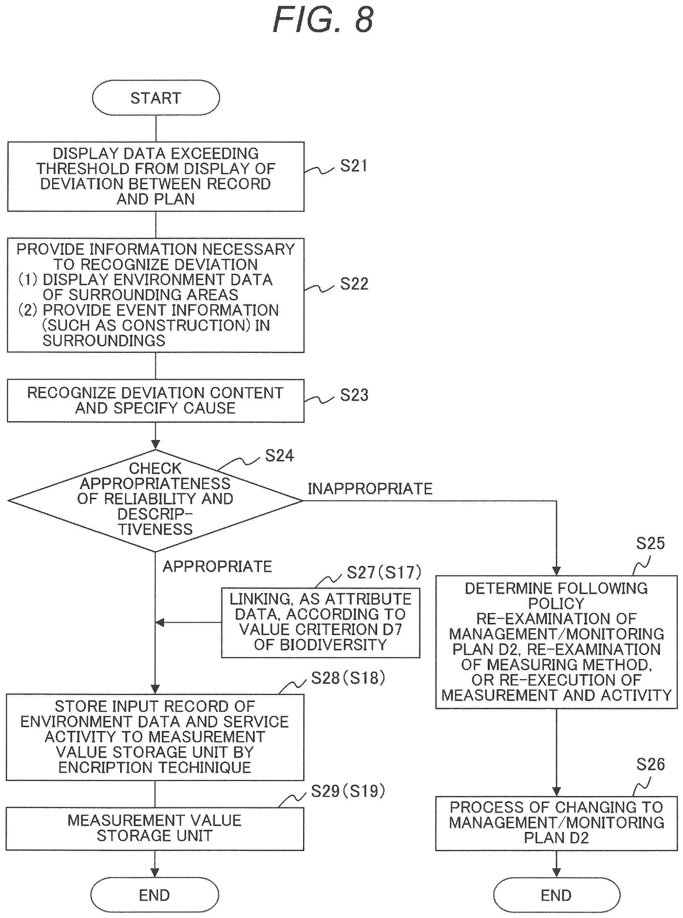

Returning back to FIG. 4, process after execution of the threshold comparison on the deviation between the record and the plan in the process step S16 will be described. First, in the case of "over threshold", the things did not go as planned. To display it to the outside so that the user recognizes it, the program shifts to output process in process step S20 in FIG. 8 which will be described later.

When the deviation is within the threshold, the things go as planned, so that it is stored as determined information. Concretely, a record of the input environment data and service activity is linked as attribute data D7 in process step S17. In process step S18, the record of the input environment data and service activity is set as determined information by an encryption technology in a form that cannot be falsified. The information is stored in the measurement value storage unit DB in process step S19.

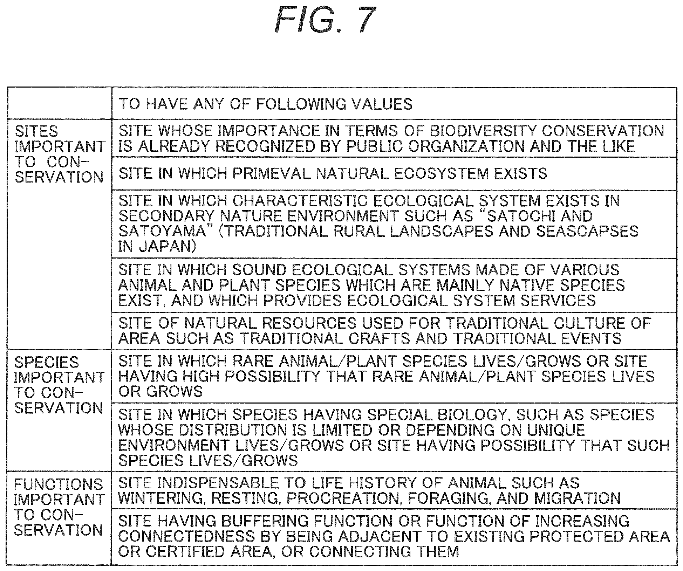

The linking of the data according to the criterion of the value of biodiversity as the attribute data D7 in the process step S17 will be described with reference to FIG. 7. First, in the certification criteria plan according to the OECM, the values of biodiversity described by referring to FIG. 2 are grasped respectively in sites which are important to conservation, species which are important to conservation, and functions which are important to conversation and, further, concrete values are illustrated respectively for of the sites, the species, and the functions. Consequently, in process step S17, when data matches any of the values with reference to the value criteria examples of biodiversity, the presence of the "value of biodiversity" is linked as the attribute to the area to be managed/monitored. It is preferable to use a blockchain for the linking method.

In the case where it is determined in the process step S16 that the data is over the threshold, the program moves to output process illustrated in FIG. 8. As the precondition, for example, it is assumed that the user performs the process by watching the WEB application 50 of FIG. 1 and, in the first stage, the process is performed in a state where the deviation between the record and the plan is displayed.

In the first process step S21 of the output flow of FIG. 8, for example, by highlighting data exceeding the threshold in the deviation display between the record and the plan, a problem part is presented to the user. Preferably, the display formats of FIG. 5 and 6 are not displayed as they are but the plan value and the actual value in the deviated part are highlighted so that the user easily recognizes it.

In process step S22, information necessary to recognize a deviation is provided to the user by displaying it on the screen. For example, the environment data of the surrounding areas is displayed or event information (such as construction) in the surroundings is provided. In process step S23, the deviation is recognized, and the cause is specified. In process step S24, appropriateness of reliability and descriptiveness is checked.

The processes so far may be performed as follows. A computing device may estimate the cause by AI or the like, or may present only information to the user and determine whether the user can recognize the presence of a convincing cause. In any case, an appropriate and convincing reason regarding why the water quality is not improved such that a civil engineering work in the neighborhood exerts an influence is checked by the above processes.

As a result, when there is appropriateness, the processes of the process steps S27 to S29 in FIG. 8 are performed. Since the series of processes are the same as the processes of the process steps S17 to S19 in FIG. 4, the description will not be repeated here.

When an appropriate reason regarding why the environment is not improved cannot be found, in process step S25, on assumption that there is a mistake somewhere in the processes performed so far, a policy on re-examination of the management/monitoring plan D2, re-examination of the measuring method, or re-execution of measurement/activity is determined. After that, a process of changing the management/monitoring plan D2 is executed in process step S26.

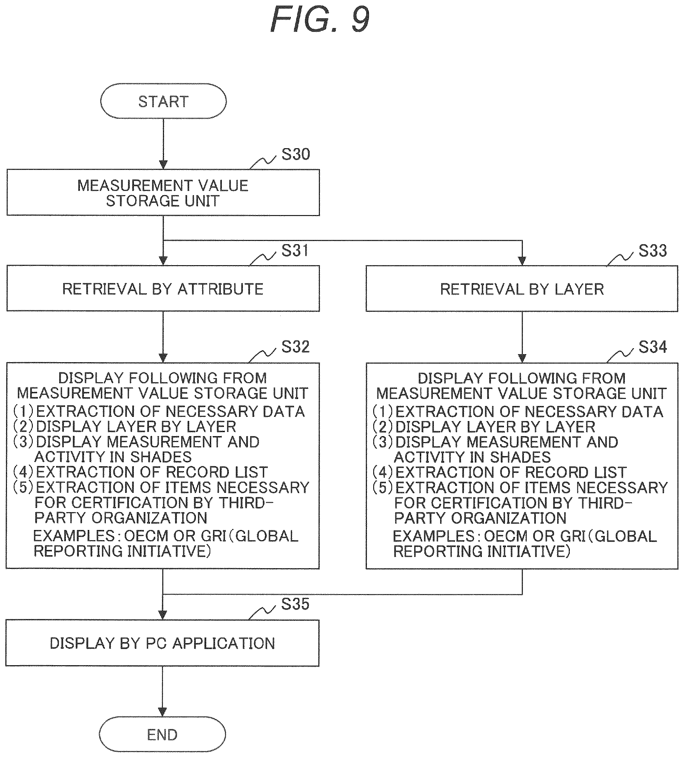

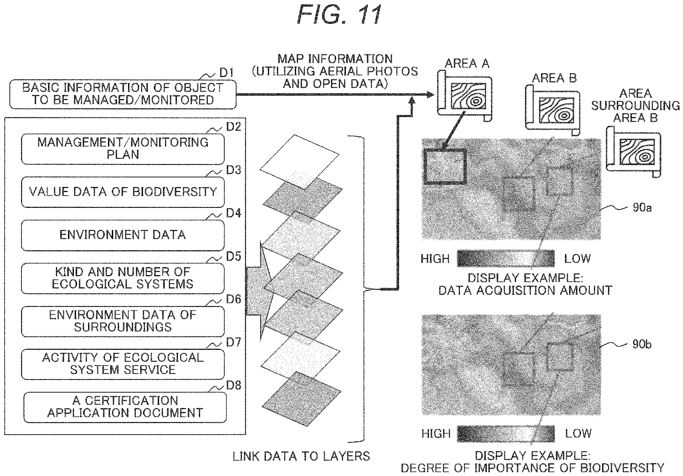

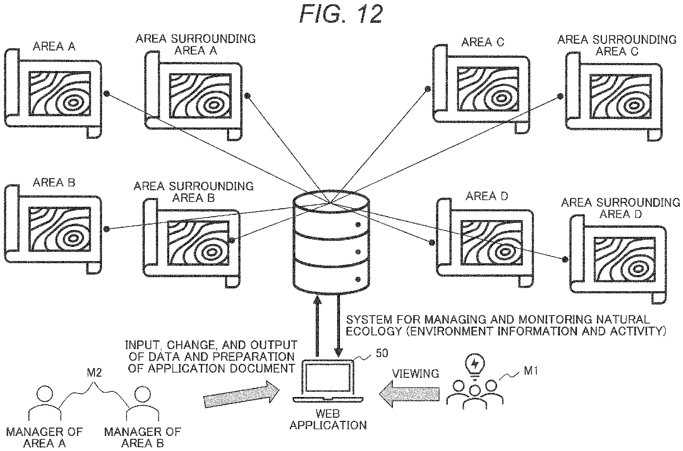

FIG. 9 is a diagram illustrating a process flow on viewing in the system use scenes in FIG. 1. Data in the database DB is displayed on the display output unit 30, and the viewer M1 as the user obtains stored information by a free retrieval. In this use system, the user operates from the WEB application 50, refers to the database DB first, and performs various retrievals. The retrieving method is a retrieval by the attribute in the process step S31 or a retrieval by the layer in the process step S32. In the retrieval by the attribute, the terms used in the data D (D1 to D9) stored in the database DB can be used as the attributes. The retrieval by the layers will be described later with reference to FIGS. 11 and 12.

According to the retrieval, data displays from the measurement value storage unit DB are performed in process steps S32 and S33 as follows. They are extraction of necessary data, layer-by-layer display, display of the measurement/activity in shades, extraction and display of a record list, extraction of items necessary for certification by a third-party institution (for example, OECM or GRI (Global Reporting Initiative)), and the like. They can be displayed by a PC application.

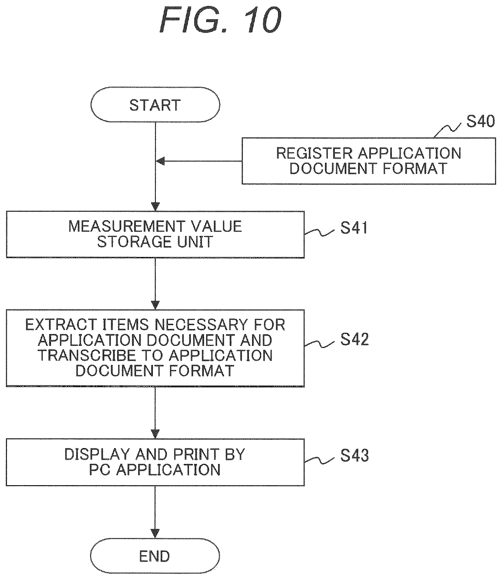

FIG. 10 is a diagram illustrating a process flow regarding preparation of an application document in the system use scenes in FIG. 1. In the use scene of preparation of an application document, an application document format is registered in advance in process step S40. In response to a request of the user, the database DB is referred to (process step S41), and items necessary for an application document are extracted in process step S42 and transcribed to the application document format. In process step S43, display and printing are performed by the PC application.

In the use scene of preparation of an application document, an application document format is input in advance, and information of requirements, plans, and measurement values stored in the database DB are written in the items in advance and displayed. Therefore, by confirming the data displayed, the user can obtain the application document in which basic parts are filled in.

FIG. 11 is a diagram illustrating layer display. In this example, each piece of the data D (D1 to D8) to be taken by the input unit 10 illustrated in FIG. 1 is grasped as a layer. In display screens 90a and 90b, a map basically including a monitoring area is displayed, and a layer is displayed over each of monitoring areas (area A, area B, and area surrounding the area B). By displaying a layer for each piece of the input data, the data acquisition amount and the importance of biodiversity are displayed in shades.

For example, by designating layers for a monitoring area in advance and displaying the layers so as to be superimposed, the state of the monitoring area can be grasped as a whole. When the state desired to be monitored varies among areas, it is sufficient to change a combination of layers. When it is desired to display a plurality of monitoring areas for comparison from the same viewpoint, the same combination of layers is set. Alternatively, it is possible to select important information for each of monitoring areas and display it in layers. The display screen 90a is an example of display from the viewpoint of a data acquisition amount, and the display screen 90b is an example of display from the viewpoint of the degree of importance of biodiversity.

FIG. 12 is a diagram illustrating a state where various users refer to the database DB in accordance with their interests and display images on screens in their preferred forms. In such a manner, an output image from the system can visualize the state of a natural ecosystem of the whole area including an area to be managed and monitored and surrounding areas.

Since a large amount of data is stored in the database DB, it is preferable to consider the following points for the use. Specifically, since information of various areas and surrounding areas and data for the areas have to be continuously stored in the measurement value storage unit (database DB), an enormous amount of data has to be stored. As a result, it takes time to always increase the data amount of the measurement value storage unit and retrieve necessary information from the enormous amount of data in the measurement value storage unit.

As a measure for the influence on the hardware, by referring to open data which is publicly open on the WEB at the time of necessity without copying and storing the open data itself to the measurement value storage unit, the data amount of the measurement value storage unit can be reduced. At the time of taking data stored in the measurement value storage unit, by linking an attribute to each of the data in advance, the retrieval is facilitated, access time to the measurement value storage unit can be shortened, and the load can be lessened.

With respect to the system for managing/monitoring a natural ecosystem according to the foregoing embodiment of the present invention, by configurating the system for managing/monitoring an ecological system (environment information and activities), the reliability, transparency, visualization, and accessibility of the environment information and activity records based on a management plan can be improved.

### Second Embodiment

In a second embodiment, matters to be further coped with at the time of executing the first embodiment will be described.

First, as information for certifying a measuring method and a measurement result, preferably, measurement items, a measuring person, location information, photographs, and photographs of the exterior appearance of a state of measurement are used.

A natural ecosystem measuring method is, preferably, specified by the kind and number of ecological systems, photographs, location information, and environment DNA.

Since an object to be measured moves physically, it is preferable to mount an individual identification chip so that the object can be specified and recognized.

Preferably, a measurement necessary for environment measurement is performed in any of water, soil, and atmosphere at a fixed point and a measurement result is transmitted to a server.

The power of blockchain is, preferably, natural energy.

The measurement frequency is, preferably, certain fixed time which is set and time at which emergency occurs.

A system in which a server administrator is not set is preferred.

Measurement data is, preferably, the kind and number of ecosystems, DO, ammonia, microorganism, nitrogen, phosphorus, CO2, and methane.

As the monitoring method, preferably, the difference between a result derived from a past measuring method in a plan and a result derived from a new mearing method is used.

At the time of output, it is preferable to perform retrieval by an attribute.

Depending on a method of displaying necessary data, layer-by-layer display, display of measurement and activity in shades, extraction of a record list, a data trend, extraction of items necessary for certification by a third-party institute, and preparation of an application document can be performed.

By linking each of data and activity records obtained and the value of biodiversity in the area to be managed/monitored, the value of biodiversity is managed as data.

### REFERENCE SIGNS LIST

- 1:: managing/monitoring system
- M1, M2:: users
- 10:: input unit
- 20:: process unit
- DB:: database
- 30:: display output unit
- 40:: application document preparation unit
- 50:: WEB application

## Claims

1. A system for managing/monitoring a natural ecosystem, comprising:
an input unit receiving basic information of a target area as an object to be managed or monitored, management or monitoring plan data of an ecosystem in the target area, environment data including measurement data, and ecosystem data;
a storage unit storing the input data and process data;
a process unit processing data; and
an output unit outputting data,
wherein the process unit calculates a deviation between the management or monitoring plan data which is input in the input unit with respect to the target area and the environment data and the ecosystem data, and in the case where the deviation is equal to or smaller than a predetermined threshold, stores the environment data and the ecosystem data regarding the target area into the storage unit and, in the case where the deviation is larger than the predetermined threshold, outputs the deviation, and the environment data and the ecosystem data of the target area from the output unit.

2. The system for managing/monitoring a natural ecosystem according to claim 1, wherein at the time of storing the environment data and the ecosystem data regarding the target area into the storage unit, attribute data according to value criteria of biodiversity is linked.

3. The system for managing/monitoring a natural ecosystem according to at least one of the previous claims, wherein in the case where the deviation is larger than the predetermined threshold, and when there is appropriateness in a cause for that the deviation is larger than the predetermined threshold, the environment data and the ecosystem data regarding the target area is stored in the storage unit.

4. The system for managing/monitoring a natural ecosystem according to claim 3, wherein at the time of storing the environment data and the ecosystem data regarding the target area into the storage unit, attribute data according to value criteria of biodiversity is linked.

5. The system for managing/monitoring a natural ecosystem according to at least one of the previous claims, wherein in the case where the deviation is larger than the predetermined threshold, and when there is no appropriateness in a cause for that the deviation is larger than the predetermined threshold, any one of re-examination of a management or monitoring plan for the target area, re-examination of a measuring method, and re-execution of measuring activity is performed.

6. The system for managing/monitoring a natural ecosystem according to at least one of the previous claims, wherein a retrieval result by attribute of data stored in the storage unit or a retrieval result by a layer at the time of dividing input data into layers is output by the output unit.

7. The system for managing/monitoring a natural ecosystem according to at least one of the previous claims, wherein the storage unit stores a format of an application document, data stored in the storage unit is written in the format, and the resultant is output by the output unit.

8. The system for managing/monitoring a natural ecosystem according to claim 2, wherein a method of linking attribute data according to a value criterion of biodiversity at the time of storing data in the storage unit is performed by blockchain.
